# EUROPÄISCHE PATENTSCHRIFT

(11) **EP 0 953 314 B1**
(45) Veröffentlichungstag und Bekanntmachung des Hinweises auf die Patenterteilung: **27.12.2006**
(21) Anmeldenummer: 98810389.1
(22) Anmeldetag: 30.04.1998
(51) Int. Cl.: A47L 13/16, D04H 13/00

(54) **Reinigungstextil**
Cleaning cloth
Tissu de nettoyage

(43) Veröffentlichungstag der Anmeldung: 03.11.1999
(73) Patentinhaber: Sanamundi Aktiengesellschaft, 9496 Balzers (LI)
(72) Erfinder: Foser, Manfred, 9496 Balzers (LI)
(74) Vertreter: Hasler, Erich

(56) Entgegenhaltungen:
- WO-A-96/10946
- DE-A- 19 510 676
- DATABASE WPI Section Ch, Week 9335 Derwent Publications Ltd., London, GB; Class F07, AN 93-277506 XP002079470 & JP 05 192284 A (DAIWABO CREATE CO LTD), 3. August 1993 (1993-08-03)

## Beschreibung

Die vorliegende Erfindung betrifft ein Reinigungstextil mit wenigstens einer ersten Reinigungsoberfläche mit Schlingen aus einer Vielzahl von Mikrofasern, resp. Mikrofilamenten.

In den letzten Jahren hat sich die umweltfreundliche, mechanische Reinigung von Oberflächen, wie Böden, Fenstern, Ablageflächen im Haushalt etc., mittels synthetischen Mikrofasern stark verbreitet. Es ist bekannt, dass Mikrofasern eine sehr gute mechanische Reinigungskraft besitzen, sodass bei der Verwendung derselben auf den Einsatz von chemischen Reinigungsmitteln weitgehend verzichtet werden kann. Die eingesetzten Fasern zeichnen sich durch eine Feinheit von meist wenigen Dezitex aus. Da solche Kunstfasern eine glatte Oberfläche besitzen und überdies aus einem hydrophoben Material, z.B. Polyester, hergestellt sind, besitzen diese aber eine im Vergleich zu Baumwolle oder Viskose wesentlich geringere Wasserabsorptionsfähigkeit.

Um das Problem der ungenügenden Wasseraufnahme von Mikrofasern zu lösen, schlägt die **WO 96/00029** einen Wischbezug vor, bei welchem ein bestehendes Textil, überwiegend aus Kunstfasern von höchstens 10 µm Querschnitt, mit einem vollflächigen Schwammtuch verbunden ist. Das Schwammtuch besteht vorzugsweise aus Baumwolle und Viskose mit einer Wasseraufnahmefähigkeit von mehr als 600% seines Eigengewichts. Das Schwammtuch dient lediglich dem Zweck, die Wasseraufnahme zu verbessern, hat selbst jedoch keine direkte Reinigungsfunktion.

Die **WO 96/10946** offenbart ein Reinigungstuch zur Reinigung von schmutzigen Oberflächen, welches auf der der schmutzigen Oberfläche zugewandten Seite längere und kürzere Schlaufen aus einem aus Filamentfasern bestehenden Garn aufweist. Die längeren Schlaufen besitzen eine Faserfeinheit von wenigstens 1 Dtex und die kürzeren Schlaufen eine solche von höchstens 1 Dtex, wobei die letzteren eine grosse Absorptionsfähigkeit für Wasser und Schmutz aufweisen sollen. Auf der anderen Seite des Reinigungstuchs sind ebenfalls kurze Schlaufen der vorbeschriebenen Art mit einer Faserfeinheit von höchstens 1 Dtex vorgesehen. Das eingesetzte Mikrofilament Garn besteht aus synthetischen Polyester- und Polyamid-Fasern in einem Verhältnis von 70:30.

Die Feinheit der Filamente wird mit ungefähr 0.3 Dtex angegeben und die des daraus hergestellten Garns mit 280 bis 330 Dtex. Die längeren Schlaufen bestehen vorzugsweise aus aus einem Polyester-Garn von 300 Dtex und einer Faserfeinheit von 1.5 Dtex. Da die Polyester- und Polyamidfasern Wasser im wesentlichen nur durch Kapillarwirkung und an der Oberfläche binden können, besitzt das beschriebene Reinigungstuch eine im Vergleich zu Baumwolle geringe Wasserabsorptionsfähigkeit. Dies hat zur Folge, dass beim Putzen die Oberflächen nicht gleichmässig benetzt werden. Dies wiederum führt dazu, dass ein Schmutzfilm häufig nicht richtig angelöst und entsprechend vom feuchten Reinigungstuch nicht entfernt werden kann. Ein weiterer Nachteil ist, dass für den Fall, dass Flüssigkeit auf der Oberfläche zurückbleibt, dieselbe später als Streifen oder Striemen sichtbar bleibt. Jeder, der schon einmal Fenster geputzt hat, ist sich dieses lästigen Problems bewusst.

Nachteilig an den bekannten Lösungsvorschlägen für verbesserte Reinigungstücher ist, dass jeweils nur Einzelaspekte des sich stellenden Reinigungsproblems gelöst werden, dass aber eine integrale Betrachtungsweise, die auch Umweltaspekte, z.B. den Bedarf an chemischen Reinigungsmittel, berücksichtigt, fehlt.

Es ist deshalb Aufgabe der vorliegenden Erfindung ein umweltschonendes Reinigungstextil bereitzustellen, welches die Verwendung von chemischen Reinigungsmitteln weitgehend unnötig macht. Weiter ist es Aufgabe der vorliegenden Erfindung, ein Reinigungstextil in Gestalt eines Reinigungstuches mit insgesamt verbesserter Reinigungswirkung bereitzustellen, bei welchem die verschiedenen, die Reinigungswirkung beeinflussenden Faktoren optimal aufeinander abgestimmt sind. Ein Ziel ist es dabei, ein Reinigungstextil, welches zur mechanischen Reinigung von Oberflächen besonders geeignet ist, d.h. ohne chemische Reinigungsmittel auskommt, zur Verfügung zu stellen. Ein weiteres Ziel ist es, ein Reinigungstextil bereitzustellen, mit welchem beim Putzen eine unerwünschte Striemenbildung weitestgehend verhindert werden kann. Weiter sollen mit dem Reinigungstextil auch unebene und strukturierte Oberflächen effizient gereinigt werden können. Ein weiteres Ziel ist es, ein Reinigungstuch bereitzustellen, welches mit Kochwäsche waschbar ist.

Erfindungsgemäss ist ein Reinigungstuch gemäss Oberbegriff von Anspruch 1 gekennzeichnet durch ein erstes Textil mit einer ersten Reinigungsseite mit Schlingen aus ersten Mikrofasern aus Polyester oder Polyamid oder einem Gemisch derselben, wobei die Polyester- oder Polyamidfasern eine Feinheit zwischen 0.1 und 10 dtex aufweisen, und die Schlingenlänge wenigstens 4 mm beträgt, und ein auf dem ersten Textil angeordneten zweiten Textil mit zweiten Fasern aus Viskose oder Baumwolle oder einem Gemisch derselben, wobei diese zweite Fasern eine Wasserabsorptionsfähigkeit von wenigstens 600%, und ganz besonders bevorzugt von wenigstens 800% des Eigengewichts des zweiten Fasermaterials aufweisen.

Durch die hohe mechanische Reinigungskraft der als Schlingen ausgebildeten Reinigungsfasern kann auf die Verwendung von chemischen Reinigungsmitteln praktisch völlig verzichtet werden, da. Schlingen - im Unterschied zu Fransen oder Polfasern - Schmutz von einer verschmutzten Oberfläche wegschaben können, d.h. den Schmutz mechanisch entfernen.

Das saugfähige zweite Textil des Reinigungstuchs dient als Flüssigkeitsreservoir für die Reinigungsseite, sodass mit der Reinigungsseite grosse Flächen geputzt werden können, ohne dass das Reinigungstuch wiederholt ins Wasser eingetaucht und Wasser aufgenommen werden müsste. Der in den Saugfasern speicherbare Wasservorrat kann an die Reinigungsfasern mit einer geringeren Wasseraufnahmekapazität abgegeben werden, sodass diese dann eine zu reinigende Oberfläche gleichmässig benetzen können. Die Feinheit der Reinigungsfasern wiederum ermöglicht über die Kappillarwirkung für den notwendigen Transport des Wassers in den Reinigungsfasern. Ein Schmutzfilm kann dadurch durch die Reinigungsfasern gleichmässig an- und abgelöst werden. Es hat sich gezeigt, dass die Versorgung der Reinigungsfasern mit der nötigen Wassermenge für eine wirkungsvolle Reinigung besonders wichtig ist.

Vorteilhaft bestehen die Schlingen des ersten Textils aus einem ungezwirnten Filamentgarn. Ungezwirnte Filamentgarne haben eine bessere Schabwirkung als gezwirnte Garnen, da die ersteren insgesamt eine grössere Angriffsfläche besitzen.

Vorteilhaft weisen die Schlingen der ersten Reinigungsseite eine Länge zwischen 4 mm und 14 mm, vorzugsweise zwischen 6 mm und 12 mm und ganz besonders bevorzugt zwischen 8 und 12 mm auf. Mit Mikrofaser-Schlingen einer bestimmten Mindestlänge können schmutzige Oberflächen effizienter von Schmutz befreit werden, da lange Schlingen in Fugen oder Vertiefungen in der zu reinigenden Oberfläche eingreifen können. Somit können mit den Mikrofaser-Schlingen auch unebene und strukturierte Oberflächen schnell und gründlich gereinigt werden.

In einer besonders vorteilhaften Ausführungsform sind die ersten Mikrofasern des ersten Textils aus Polyester und die zweiten Fasern des zweiten Textils aus Viskose und/oder Baumwolle hergestellt. Viskose und Baumwolle haben den Vorteil, dass Fasern aus diesen Materialien - im Gegensatz zu solchen aus Polyamid oder Polyester - Wasser molekular binden können und daher eine wesentlich grössere Wasseraufnahmekapazität haben als Polyester- oder Polyamid-Fasern. Vorteilhaft kommen beim zweiten Textil Viskosefasern zum Einsatz. Diese können eine Feinheit zwischen ungefähr 1 und 30 dtex, vorzugsweise eine solche bis max. 20 dtex aufweisen.

Es ist bevorzugt, dass die Mikrofasern des ersten Textils eine Feinheit von maximal 6 Dtex, vorzugsweise zwischen 0.1 und 3 Dtex und ganz besonders bevorzugt zwischen 0.1 und 1 Dtex aufweisen. Feinere Fasern haben den Vorteil einer verbesserten Kapillarwirkung und einer guten mechanischen Reinigungskraft. Die zweiten Fasern sind ebenfalls solche einer maximalen Feinheit. Bevorzugt besitzen die zweiten Fasern eine Feinheit von maximal 30 bis 50 dtex und vorzugsweise eine Feinheit zwischen 10 und 30 dtex.

Zweckmässigerweise bestehen die Schlingen der ersten Reinigungsoberfläche aus jeweils zwischen ungefähr 1 und 300, vorzugsweise zwischen ungefähr 20 und 300 Fasern. Vorteilhaft sind auf der ersten Reinigungsoberfläche zwischen 10 und 50 Schlingen/cm², vorzugsweise zwischen 20 und 40 Schlingen/cm² (= Besatzdichte) vorgesehen.

Vorteilhaft definieren die zweiten Fasern des zweiten Textils eine zweite Reinigungsseite und das zeite Textil ist Rücken an Rücken mit dem ersten Textil verbunden. Das beschriebene zusammengesetzte Reinigungstextil hat den Vorteil, dass die erste Reinigungsseite besonders geeignet ist für die Entfernung von Schmutz von glatten und rauhen Oberflächen und die andere Seite zum Nachtrocknen der gereinigten Oberflächen (= Saugseite). Flüssigkeit, welche durch die wenig saugstarke Reinigungsseite nicht aufgenommen wird, kann durch Nachtrocknen mit den zweiten Fasern der zweiten Reinigungsoberfläche des zweiten Textils praktisch vollständig entfernt werden, sodass keine Striemen zurückbleiben.

Vorteilhaft sind wenigstens die Oberflächen der Mikrofasern des ersten Textils aufgerauht. Überraschenderweise hat sich gezeigt, dass durch chemisches Aufrauhen die Kapillar- und die Reinigungswirkung der Fasern verbessert werden können. Das Aufrauhen kann dadurch geschehen, dass man eine Lauge während einer bestimmten Zeit auf die Fasern einwirken lässt. Das Ausmass der Faserrauhheit lässt sich einfach durch den eingetretenen Materialschwund feststellen. Zweckmässigerweise beträgt der Materialschwund wenigstens 3%, vorzugsweise zwischen 5 und 50% und ganz besonders bevorzugt zwischen 10 und 35%.

Obwohl die Fasern der zweiten Reinigungsseite als Fransen oder Polfasern vorliegen können, sind diese gemäss einer vorteilhaften Ausführungsform Schlingen mit einer Länge zwischen 3 und 12 mm, vorzugsweise zwischen 4 und 12 mm und ganz besonders bevorzugt zwischen 6 und 10 mm. Dies hat den Vorteil, dass die zweite Reinigungsseite ebenfalls eine verbesserte mechanische Reinigungswirkung besitzt, da die Schlingen ähnlich einem Schaber den auf der Oberfläche haftenden Schmutz wegschaben können. Vorteilhaft weist die zweite Reinigungsseite zwischen 20 und 50, vorzugsweise 25 bis 40 Schlingen pro cm² auf.

In einer bevorzugten Ausführungsform sind die ersten und zweiten Textilien wenigstens teilweise, beispielsweise an Ihrem Umfangsrand, durch einen Saum miteinander verbunden. Zwei gleich grosse Stücke der entsprechenden Textilien können zu einem Reinigungstuch zusammengenäht, -geklebt oder - geschweisst sein, wobei die Verbindung jeweils so sein muss, dass ein Flüssigkeitsaustausch von den saugstarken Fasern zu den weniger saugstarken Fasern und umgekehrt erfolgen kann.

Durch Aufbringen einer wasserdurchlässigen Kunststoffschicht an der Rückseite wenigstens des ersten Textils können die Schlingen am Textilgrundgewebe fixiert werden. Dazu kann ein geeigneter thermoplastischer Kunststoff verwendet werden. Dadurch lässt sich erreichen, dass die Schlingen stets aufgerichtet sind, was die Reinigungswirkung des Reinigungstuchs verbessert. Auch kann durch die Kunststoffbeschichtung verhindert werden, dass das Reinigungstextil beim Kochen eingeht.

Das oben beschriebene Reinigungstextil wird vorteilhaft als Reinigungshandschuh, als Wischbezug für ein Reinigungsgerät oder als Besatzstück für einen Spannrahmen eingesetzt.

Nachfolgend werden Ausführungsbeispiele der Erfindung unter Bezugnahme auf die Figuren beschrieben. Es zeigt:
- Fig. 1: ein erstes Ausführungsbeispiel eines erfindungsgemässen Reinigungstextils aus zwei unterschiedlichen Textilien mit zwei unterschiedlichen Reinigungsoberflächen in perspektivischer Ansicht;
- Fig. 2: eine Draufsicht auf die erste Reinigungsseite des Reinigungstextils von Fig. 1 mit Mikrofasern mit einer relativ geringen Wasseraufnahmefähigkeit und einem hohem mechanischem Reinigungsvermögen;
- Fig. 3: ein Teilausschnitt des Reinigungstuchs von Fig. 1 im Schnitt;
- Fig. 4: eine Draufsicht zweite Reinigungsoberfläche des Reinigungstextils von Fig. 1; und
- Fig. 5: im Schnitt ein zweites Ausführungsbeispiel eines ebenfalls aus einem ersten und einem zweiten textilen Gewebe bestehendes Reinigungstextils mit zwei unterschiedlichen, jeweils durch Schlingen gebildeten Reinigungsoberflächen.

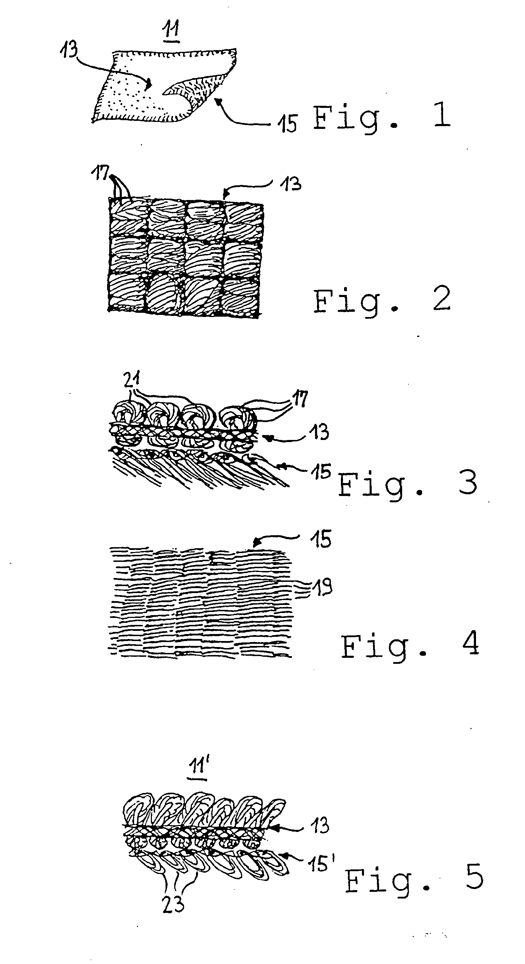

Die in den Figuren 1 bis 5 gezeigten Reinigungstextilien 11,11' bestehen jeweils aus zwei unterschiedlichen textilen Geweben 13,15, einem ersten Textil 13 mit ersten Mikrofasern 17 und einem zweitem Textil 15 mit zweiten Fasern 19. Die ersten Mikrofasern 17 sind vorzugsweise Polyesterfasern und die zweiten Fasern 19 vorzugsweise Viskose- oder Baumwollfasern. Die Polyesterfasern 17 definieren eine erste Reinigungsoberfläche und die Viskose- oder Baumwollfasern eine zweite Reinigungsoberfläche. Die beiden Textilien 13,15 sind Rücken an Rücken aneinander angeordnet, sodass verschmutzte Oberflächen je nach Bedarf mit der einen oder der anderen Reinigungsoberfläche, wie dies weiter unten noch näher beschrieben ist, gereinigt werden können.

Gemäss einem ersten Ausführungsbeispiel (Fig. 1 bis 4) sind die Fasern 17 in Form von Schlingen 21 einer Länge von vorzugsweise 8 bis 12 mm entsprechend einer Fadenlänge von ungefähr 16 bis ca. 24 mm an einer Seite des ersten Textils 13 angeordnet (Fig. 3). Da die Mikrofaserschlingen sich normalerweise zusammenziehen, muss für die Bestimmung der Schlingenlänge eine Schlinge gestreckt werden. Die Schlingen 21 sind aus einem ungezwirnten Filamentgarn der entsprechenden Fasern 17 gebildet. Das Filamentgarn besteht vorzugsweise aus 100 bis 200 Fasern 17. Die Feinheit der Fasern 17 beträgt maximal 10 Dezitex, vorzugsweise jedoch eine solche von maximal 6 dtex. Die Schlingen 21 sind am Textilgrundgewebe angeordnet und an diesem mittels einer in den Figuren nicht ersichtlichen, den Wasseraustausch nicht behindernden, durchlässigen Kunststoffbeschichtung fixiert.

Die Fasern 19 des zweiten Textils 15 sind gemäss dem gezeigten ersten Ausführungsbeispiel Fransen oder Polfasern, die an einer Seite des Textils vorgesehen sind (Fig. 3). Die Fransen 19 besitzen vorteilhaft eine Länge von wenigstens 6 mm, vorzugsweise zwischen 6 und ca. 12 mm. Obwohl grundsätzlich Baumwollfasern verwendet werden können, kommen vorzugsweise auf dem Markt erhältliche Viskosfasern grösstmöglicher Feinheit zum Einsatz. Die Feinheit der angebotenen Viskosefasern bewegt sich üblicherweise zwischen 10 und 30 dtex.

Die Ausführungsform gemäss Fig. 5 unterscheidet sich von derjenigen der Fig. 1 bis 4 dadurch, dass auch das zweite Textil 15' an einer Seite Schlingen 23 besitzt, welche jeweils aus einer Vielzahl von Einzelfasern bestehen. Durch die Schlingen kann die mechanische Reinigungswirkung des zweiten Textils verbessert werden.

Von Bedeutung für die gute Reinigungswirkung des aus verschiedenen Fasern gebildeten Reinigungstextils ist, dass feine Polyester- oder Polyamid-Mikrofaserschlingen mit einer besonders guten mechanischen Reinigungswirkung (hier auch als Reinigungsfasern bezeichnet) aber einer relativ geringen Wasseraufnahmekapazität mit Baumwoll- oder Viskosefasern, die eine weniger ausgeprägte mechanische Reinigungswirkung, dafür aber eine umso höhere Wasseraufnahmekapazität aufweisen (hier deshalb auch als Saugfasern bezeichnet), zusammenwirken. Weiter ist von Bedeutung, dass die Schlingen eine bestimmte Mindestlänge aufweisen, sodass diese in Fugen eingreifen können.

Die vorzugsweise eingesetzten Viskosefasern besitzen eine Wasseraufnahmefähigkeit von wenigstens 600%, vorzugsweise ungefähr 900 bis 1000% des Eigengewichts des trockenen Materials. Die Wasseraufnahmefähigkeit von Fasern wird gemessen, indem eine bestimmte Menge des trockenen Fasermaterials eine bestimmte Zeit, meist 1 Minute, in Wasser eingetaucht wird, dann herausgenommen wird und, nachdem man das Fasermaterial 30 Sekunden hat abtropfnen lassen, neuerdings gewogen wird.

Zur Herstellung des Reinigungstextils werden zweckmässigerweise aus den Mikrofasern hergestellte ungezwirnte Filamentgarne eingesetzt. Diese werden zunächst auf bekannten Kettenwirkautomaten zur gewünschten Schlingenware verarbeitet, die als Textilbahnen bereitgestellt werden.

Die Textilbahnen des ersten Textils (Polyesterfasern) werden dann für eine bestimmte Zeit einem alkalischen wässerigen Lösung ausgesetzt, bis ein bestimmter Materialschwund eingetreten ist. Anhand des Materialschwunds kann der Grad der eingetretenen Reaktion indirekt festgestellt werden. Überraschenderweise kann durch die vorgeschlagene alkalische Ätzung die Reinigungswirkung der Mikrofasern verbessert werden. Die festgestellte Verbesserung der mechanischen Reinigungskraft der Fasern lässt vermuten, dass - ganz allgemein - durch eine alkalische Behandlung die Schab- und die Kapillarwirkung von Mikrofasern Fasern verbessert werden können.

Sobald eine ausreichende Ätzung der Polyesterfasern erfolgt ist, wird die Lauge neutralisiert und/oder ausgewaschen. Die Schlingen werden sodann mittels einer durchlässigen Kunststoffbeschichtung mit dem textilen Grundgewebe verbunden. Damit kann die Bindung der Schlingen am Grundgewebe stabilisiert werden. Damit kann auch auch verhindert werden, dass das zwei unterschiedliche Kunstfasern aufweisende Reinigungstextil beim Kochen eingeht oder sich verzieht. Das Färben der Textilien kann vor oder nach der alkalischen Behandlung der Fasern erfolgen.

Das Reinigungstextil wird erhalten, indem aus den ausgerüsteten Textilbahnen einander entsprechende Stücke des ersten und zweiten Textils ausgeschnitten und Rücken an Rücken zusammengenäht werden. Das Reinigungstextil lässt sich somit kostengünstig herstellen.

Ein vorteilhaftes Ausführungsbeispiel eines Reinigungstuchs besitzt folgende Kenndaten:
Fasern der Reinigungsseite: Polyester
   - Feinheit der Fasern: 1 bis 6 Dtex
   - Anzahl Fasern pro Faden: ca. 150
   - Faseroberfläche: alkalisch aufgerauht
   - Schlingenlänge: 8 - 10 mm
   - Besatzdichte (Anzahl Schlingen pro cm²) 20 bis 40 Schlingen/cm²
Fasern der Saugseite: Viskose
   - Feinheit der Fasern: 10 bis 30 Dtex
   - Anzahl Fasern pro Faden: ca. 300
   - Schlingenlänge: 6-10 mm
   - Besatzdichte (Anzahl Schlingen pro cm²) : 25 bis 50 Schlingen/cm²

Dank der überraschend guten mechanischen Reinigungskraft und Wasseraufnahmefähigkeit des erfindungsgemässen Reinigungstextils kann auf die Verwendung von chemischen Reinigungsmitteln praktisch völlig verzichtet werden. Das beschriebene Reinigungstexteil kann trocken, wird in der Regel jedoch feucht eingesetzt. Als Zusätze in das Putzwasser kommen vorzugsweise lediglich biologisch abbaubare, natürliche Stoffe zum Einsatz, beispielsweise Glycerin, Wachse oder dergleichen, die die mechanisch gereinigten Oberflächen mit einem Schutzfilm überziehen.

Verschmutzte Oberflächen werden gereinigt, indem das mit Wasser befeuchtete Reinigungstuch zunächst mit der Reinigungsseite nach unten, d.h. mit den Polyesterfasern, mit kreisenden Bewegungen über die verschmutzte Oberfläche bewegt wird. Dabei bildet sich ein gleichmässiger Feuchtigkeitsfilm auf der Oberfläche, welcher den Schmutz teilweise löst. Gleichzeitig wird anhaftender Schmutz durch die hauchdünnen, scheuernden Faserschlingen weggeschabt. Die normalerweise zusammengezogenen Mikrofaserschlingen werden dabei beim Putzen in Putzrichtung gestreckt, wodurch eine grössere Angriffsfläche entsteht. Das beim Putzen an die Oberfläche abgegebene Wasser wird dabei durch Feuchtigkeit aus den teilweise mit Wasser vollgesogenen Viskose- oder Baumwollfasern ersetzt. Anschliessend wird das Reinigungstuch umgekehrt und die soeben bearbeitete Oberfläche mit der Saugseite nach unten abgewischt. Dabei wird der restliche Schmutz und auf der Oberfläche noch vorhandenes Wasser von den Saugfasern aufgenommen. Das Putzwasser kann ein geringe Menge eines Waxes, z.B. Kanaubawax, enthalten. Das Wax hat den Zweck, die Oberfläche zu versiegeln und einen gleichmässigen Glanz zu verleihen.

Das oben beschriebene Reinigungstuch wird vorteilhaft zur mechanischen Reinigung von Böden und Wänden aus Kacheln, Fliessen, von glatten Oberflächen, wie von lackierten Flächen, Fenstern, Becken, Wannen und Armaturen eingesetzt. Die Reinigung erfolgt mechanisch und im wesentlichen ohne chemische Reinigungsmittel. Das Reinigungstuch kann auch als Besatzstück für ein Reinigungswerkzeug dienen.

## Patentansprüche

1. Reinigungstextil mit wenigstens einer ersten Reinigungsoberfläche (13) mit Schlingen aus einer Vielzahl von Mikrofasern oder Mikrofilamenten,
**gekennzeichnet durch**
ein erstes Textil mit einer ersten Reinigungsseite mit Schlingen (21) aus ersten Mikrofasern (17) aus Polyester oder Polyamid oder einem Gemisch derselben;
wobei die Polyester- oder Polyamidfasern eine Feinheit zwischen 0.1 und 10 dtex aufweisen, und die Schlingenlänge wenigstens 4 mm beträgt; und
ein auf dem ersten Textil angeordneten zweiten Textil (15) mit zweiten Fasern (19) aus Viskose oder Baumwolle oder einem Gemisch derselben wobei diese zweite Fasern eine Wasserabsorptionsfähigkeit von wenigstens 600%, und ganz besonders bevorzugt von wenigstens 800% des Eigengewichts des zweiten Fasermaterials aufweisen.

2. Reinigungstextil nach Anspruch 1, **dadurch gekennzeichnet, dass** die Schlingen (21) des ersten Textils aus einem ungezwirnten Filamentgarn hergestellt sind.

3. Reinigungstextil nach Anspruch 1 oder 2, **dadurch gekennzeichnet, dass** die Schlingen (21) eine Länge zwischen 4 mm und 14 mm, vorzugsweise zwischen 6 mm und 12 mm und ganz besonders bevorzugt zwischen 8 und 12 mm aufweisen

4. Reinigungstextil nach einem der Ansprüche 1 bis 3, **dadurch gekennzeichnet, dass** die ersten Mikrofasern (17) des ersten Textils (13) aus Polyester und die zweiten Fasern (19) des zweiten Textils (15) aus Viskose und/oder Baumwolle hergestellt sind.

5. Reinigungstextil nach Anspruch 1 bis 4, **dadurch gekennzeichnet, dass** die ersten Mikrofasern (17) des ersten Textils (13) eine Feinheit von maximal 6 Dtex, vorzgsweise zwischen 0.1 und 3 Dtex und ganz besonders bevorzugt zwischen 0.1 und 1 Dtex aufweisen.

6. Reinigungstextil nach einem der Ansprüche 1 bis 5, **dadurch gekennzeichnet, dass** die Schlingen (21) des ersten Textils (13) jeweils zwischen 1 und ungefähr 300, vorzugsweise zwischen ungefähr 20 und 300 Fasern aufweisen.

7. Reinigungstextil nach einem der Ansprüche 1 bis 6, **dadurch gekennzeichnet, dass** die Reinigungsseite des ersten Textils (13) zwischen 10 und 50 Schlingen/cm², vorzugsweise zwischen 20 und 40 Schlingen/cm² aufweist.

8. Reinigungstextil nach einem der Ansprüche 1 bis 7, **dadurch gekennzeichnet, dass** die zweiten Fasern (19) des zweiten Textils (15) eine zweite Reinigungsseite definieren und dass die beiden Textilien (13,15) Rücken an Rücken miteinander verbunden sind, sodass das Reinigungstextil (11) dem Benützer zwei unterschiedliche Reinigungsoberflächen zur Verfügung stellt.

9. Reinigungstextil nach einem der Ansprüche 1 bis 8, **dadurch gekennzeichnet, dass** die Reinigungsseite des zweiten Textils (15) Schlingen (23) einer Länge zwischen 3 und 12 mm, vorzugsweise einer Länge zwischen 4 und 10 mm besitzt.

10. Reinigungstextil nach einem der Ansprüche 1 bis 9, **dadurch gekennzeichnet, dass** die Reinigungsseite des zweiten Textils (15) zwischen 20 und 50, vorzugsweise 25 bis 40 Schlingen (25) pro cm² aufweist.

11. Reinigungstextil nach einem der Ansprüche 1 bis 10, **dadurch gekennzeichnet, dass** wenigstens die Oberfläche der Mikrofasern (17) des ersten Textils (13) aufgerauht sind.

12. Reinigungstextil nach Anspruch 11, **dadurch gekennzeichnet, dass** die Mikrofasern (17) alkalisch aufgerauht sind.

13. Reinigungstextil nach Anspruch 11 oder 12, **dadurch gekennzeichnet, dass** durch die vorgängige Behandlung des ersten Textils (13) mit Alkalilauge ein gewichtsmässiger Materialschwund von wenigstens 3 %, vorzugsweise 10% erzeugt wird.

14. Reinigungstextil nach einem der Ansprüche 11 bis 13, **dadurch gekennzeichnet, dass** der durch die alkalische Behandlung erzeugte Materialschwund des ersten Textils (13) zwischen 5 und 50%, vorzugsweise zwischen 10 und 35% beträgt.

15. Reinigungstextil nach einem der Ansprüche 1 bis 14, **dadurch gekennzeichnet, dass** die ersten und zweiten Textilien (13,15) wenigstens teilweise, beispielsweise an Ihrem Umfangsrand durch einen Saum, miteinander verbunden sind.

16. Reinigungstextil nach einem der Ansprüche 1 bis 15, **dadurch gekennzeichnet, dass** die Schlingen (23,25) jeweils an einer Seite der Textilien ausgebildet sind und dass die Rückseiten der Textilien (13,15) eine Kunststoffbeschichtung, beispielsweise hergestellt aus einem Acryl- oder Polyesterharz, aufweisen.

17. Reinigungstextil nach Anspruch 15 oder 16, **dadurch gekennzeichnet, dass** die Reinigungstextilien (13,15) gewebt oder gewirkt ist und ein spezifisches Gewicht zwischen 220 g/m² und 680 g/m², vorzugsweise zwischen 250 g/m² und 500 g/m², besitzt.

18. Wischbezug für ein Reinigungsgerät mit einem Reinigungstextil gemäss einem der Ansprüche 1 bis 17.

## Claims

1. Cleaning textile having at least one first cleaning surface (13) with loops consisting of a plurality of micro-fibres or micro-filaments, **characterized by**
a first textile having a first cleaning side with loops (21) consisting of first micro-fibres (17) of polyester or polyamide or a blend of the same;
wherein the polyester or polyamide fibres have a yarn count of between 0.1 and 10 dtex and the loop length is at least equivalent to 4 mm; and a second textile (15) arranged on the first textile having second fibres (19) of viscose or cotton or a blend of the same, wherein these second fibres have a water absorption capability of,at least 600% and very particularly preferably of at least 800% of the actual weight of the second fibre material.

2. Cleaning textile according to Claim 1, **characterized in that** the loops (21) of the first textile are made from an untwined filament yarn.

3. Cleaning textile according to Claim 1 or 2, **characterized in that** the loops (21) have a length of between 4 mm and 14 mm, preferably of between 6 mm and 12 mm and very particularly preferably of between 8 and 12 mm.

4. Cleaning textile according to any one of Claims 1 to 3, **characterized in that** the first micro-fibres (17) of the first textile (13) are made from polyester and the second fibres (19) of the second textile (15) are made from viscose and/or cotton.

5. Cleaning textile according to Claims 1 to 4, **characterised in that** the first micro-fibres (17) of the first textile (13) have a yarn count of a maximum of 6 dtex, preferably between 0.1 and 3 dtex and very particularly preferably between 0.1 and 1 dtex.

6. Cleaning textile according to any one of Claims 1 to 5, **characterized in that** the loops (21) of the first textile (13) in each case have between 1 and approximately 300 and preferably between approximately 20 and 300 fibres.

7. Cleaning textile according to any one of Claims 1 to 6, **characterized in that** the cleaning side of the first textile (13) has between 10 and 50 loops/cm² and preferably between 20 and 40 loops/cm².

8. Cleaning textile according to any one of Claims 1 to 7, **characterized in that** the second fibres (19) of the second textile (15) define a second cleaning side and **in that** the two textiles (13, 15) are joined back to back to one another, so that the cleaning textile (11) provides the user with two different cleaning surfaces.

9. Cleaning textile according to any one of Claims 1 to 8, **characterized in that** the cleaning side of the second textile (15) has loops (23) of a length between 3 and 12 mm and preferably of a length between 4 and 10 mm.

10. Cleaning textile according to any one of Claims 1 to 9, **characterized in that** the cleaning side of the second textile (15) has between 20 and 50 and preferably 25 to 40 loops (25) per cm².

11. Cleaning textile according to any one of Claims 1 to 10, **characterized in that** at least the surface of the micro-fibres (17) of the first textile (13) is roughened.

12. Cleaning textile according to Claim 11, **characterized in that** the micro-fibres (17) are alkalinically roughened.

13. Cleaning textile according to either Claim 11 or 12, **characterized in that** by means of the preceding treatment of the first textile (13) with alkaline solution, a material weight loss of at least 3%, and preferably 10%, is produced.

14. Cleaning textile according to any one of Claims 11 to 13, **characterized in that** the material loss, produced by means of the alkaline treatment, of the first textile (13) is equivalent to between 5 and 50% and preferably between 10 and 35%.

15. Cleaning textile according to any one of Claims 1 to 14, **characterized in that** the first and second textiles (13, 15) are at least partly joined to one another, for example at their circumferential edge by means of a hem.

16. Cleaning textile according to any one of Claims 1 to 15, **characterized in that** the loops (23, 25) in each case are formed on one side of the textiles and **in that** the rear sides of the textiles (13, 15) have a plastic coating, for example made from acrylic resin or polyester resin.

17. Cleaning textile according to either Claim 15 or 16, **characterized in that** the cleaning textiles (13, 15) are woven or knitted and have a specific weight between 220 g/m² and 680 g/m² and preferably between 250 g/m² and 500 g/m².

18. Wipe cover for a cleaning device having a cleaning textile according to any one of Claims 1 to 17.

## Revendications

1. Tissu de nettoyage avec au moins une première surface de nettoyage (13) avec des boucles d'une pluralité de microfibres ou de microfilaments, **caractérisé par** un premier tissu avec une première face de nettoyage avec des boucles (21) de premières microfibres (17) en polyester ou en polyamide ou un mélange de ces derniers ; sur lequel les fibres en polyester ou en polyamide présentent une finesse entre 0,1 et 10 Dtex, et où la longueur des boucles s'élève au moins à 4 mm ; et un second tissu (15) disposé sur le premier tissu avec des secondes fibres (19) en viscose ou en coton ou un mélange de ces derniers, sur lequel ces secondes fibres présentent une capacité d'absorption d'eau d'au moins 600%, et de manière tout particulièrement préférée d'au moins 800% du propre poids du second matériau de fibres.

2. Tissu de nettoyage selon la revendication 1, **caractérisé en ce que** les boucles (21) du premier tissu sont fabriquées à partir d'un fil continu non tordu.

3. Tissu de nettoyage selon les revendications 1 ou 2, **caractérisé en ce que** les boucles (21) présentent une longueur entre 4 mm et 14 mm, de préférence entre 6 mm et 12 mm, et de manière tout particulièrement préférée entre 8 et 12 mm.

4. Tissu de nettoyage selon l'une des revendications 1 à 3, **caractérisé en ce que** les premières microfibres (17) du premier tissu (13) sont fabriquées en polyester et les secondes fibres (19) du second tissu (15) en viscose et/ou en coton.

5. Tissu de nettoyage selon les revendications 1 à 4, **caractérisé en ce que** les premières microfibres (17) du premier tissu (13) présentent une finesse de 6 Dtex au maximum, de préférence entre 0,1 et 3 Dtex, et de manière tout particulièrement préférée entre 0,1 et 1 Dtex.

6. Tissu de nettoyage selon l'une des revendications 1 à 5, **caractérisé en ce que** les boucles (21) du premier tissu (13) présentent respectivement entre 1 et approximativement 300, de préférence entre approximativement 20 et 300 fibres.

7. Tissu de nettoyage selon l'une des revendications 1 à 6, **caractérisé en ce que** la face de nettoyage du premier tissu (13) présente entre 10 et 50 boucles /cm² de préférence entre 20 et 40 boucles/cm².

8. Tissu de nettoyage selon l'une des revendications 1 à 7, **caractérisé en ce que** les secondes fibres (19) du second tissu (15) définissent une seconde face de nettoyage et **en ce que** les deux tissus (13, 15) sont unis par leurs parties postérieures de telle manière que le tissu de nettoyage (11) met à la disposition de l'utilisateur deux surfaces de nettoyage différentes.

9. Tissu de nettoyage selon l'une des revendications 1 à 8, **caractérisé en ce que** la face de nettoyage du second tissu (15) possède des boucles (23) d'une longueur entre 3 et 12 mm, de préférence une longueur entre 4 et 10 mm.

10. Tissu de nettoyage selon l'une des revendications 1 à 9, **caractérisé en ce que** la face de nettoyage du second tissu (15) présente entre 20 et 50, de préférence 25 à 40 boucles (25) par cm².

11. Tissu de nettoyage selon l'une des revendications 1 à 10, **caractérisé en ce qu'**au moins la surface des microfibres (17) du premier tissu (13) est cardée.

12. Tissu de nettoyage selon la revendication 11, **caractérisé en ce que** les microfibres (17) sont cardées par traitement alcalin.

13. Tissu de nettoyage selon les revendications 11 ou 12, **caractérisé en ce que** par le traitement préalable du premier tissu (13) avec de la lessive alcaline il se produit une perte de matériau en poids d'au moins 3%, de préférence de 10%.

14. Tissu de nettoyage selon l'une des revendications 11 à 13, **caractérisé en ce que** la perte de matériau du premier tissu (13) produite par le traitement alcalin s'élève à un pourcentage de 5% à 50%, de préférence un pourcentage de 10% à 35%.

15. Tissu de nettoyage selon l'une des revendications 1 à 14, **caractérisé en ce que** le premier et le second tissu (13, 15) sont unis entre eux au moins partiellement, par exemple sur leur bord de contour, par un ourlet.

16. Tissu de nettoyage selon l'une des revendications 1 à 15, **caractérisé en ce que** les boucles (23, 25) sont formées respectivement sur une face des tissus et **en ce que** les faces postérieures des tissus (13, 15) présentent un revêtement en plastique, par exemple fabriqué en une résine acrylique ou en polyester.

17. Tissu de nettoyage selon les revendications 15 ou 16, **caractérisé en ce que** les tissus de nettoyage (13, 15) sont tissés ou tricotés et possèdent un poids spécifique entre 220 g/m² et 680 g/m², de préférence entre 250 g/m² et 500 g/m².

18. Tête de balai-serpillière pour un ustensile de nettoyage avec un tissu de nettoyage selon l'une des revendications 1 à 17.
